# EUROPEAN PATENT APPLICATION

(11) **EP 4 446 804 A1**
(43) Date of publication of application: **16.10.2024**
(21) Application number: 22903099.4
(22) Date of filing: 07.11.2022
(51) Int. Cl.: G02F 1/1335

(54) **DISPLAY PANEL AND ELECTRONIC DEVICE**

(30) Priority: 08.12.2021 CN 202123074273 U
(71) Applicant: Huizhou TCL Mobile Communication Co., Ltd, Guangdong 516006 (CN)
(72) Inventor: WANG, Quanlin, Guangdong 516006 (CN); ZHAO, Yunguo, Guangdong 516006 (CN)
(74) Representative: Herrero & Asociados, S.L.
(86) International application number: PCT/CN2022/130416
(87) International publication number: WO 2023/103676

(57) **Abstract**

A display panel and an electronic device. The display panel comprises: a first polarizer; a display structure layer, wherein a light incident face of the display structure layer is provided on a light emergent face of the first polarizer; a second polarizer, wherein a light incident face of the second polarizer is provided on a light emergent face of the display structure layer; and a quarter-wave plate, wherein a light incident face of the quarter-wave plate is provided on a light emergent face of the second polarizer, and the quarter-wave plate receives linearly polarized light, which is emitted by the second polarizer, and emits circularly polarized light, so as to improve the display effect of the display panel.

## Description

This Application claims priority of China Patent Application entitled "DISPLAY PANELAND ELECTRONIC DEVICE", Application No. 202123074273.5, filed December 8, 2021, the entirety of which is incorporated by reference herein.

### Technical Field

This application relates to the field of display technology, and particularly, to a display panel and an electronic device.

### Background Art

An LCD (Liquid Crystal Display) liquid crystal display controls the intensity of light transmission by changing the orientation of liquid crystal molecules according to changes in the intensity of the electric field sandwiched in between the liquid crystal molecules for displaying images. At present, liquid crystal displays have been widely used in various terminal display devices of large, medium and small sizes due to their characteristics of light weight, small size and thin thickness.

In the related techniques, an LCD liquid crystal display is provided with a polarizer, so that the light used by the LCD liquid crystal display to display images passes through the polarizer to form linearly polarized light and is captured by the human eyes. However, the linearly polarized light leads poor display effect of the LCD liquid crystal display.

### Summary of Invention

### Technical Problem

An embodiment of the present application provides a display panel and an electronic device, which can improve display effect of a display panel.

### Solution to Problem

### Technical Solution

In a first aspect, an embodiment of the present application provides a display panel, comprising:
a first polarizer;
a display structure layer, a light incident surface of the display structure layer be disposed on a light emergent surface of the first polarizer;
a second polarizer, a light incident surface of the second polarizer being disposed on a light emergent surface of the display structure layer; and
a quarter-wave plate, a light incident surface of the quarter-wave plate being disposed on a light emergent surface of the second polarizer, and the quarter-wave plate receiving linearly polarized light, which is emitted by the second polarizer, and emitting circularly polarized light.

In a second aspect, an embodiment of the present application provides an electronic device, comprising a display panel recited in the first aspect.

### Advantageous Effects of Invention

### Advantageous Effects

In an embodiment of the present application, a quarter-wave plate converts linearly polarized light of a second polarizer into circularly polarized light which is emitted and then captured by the user's eyes. The circularly polarized light is closer to natural light than the linearly polarized light which is beneficial to human eye health. On the other hand, if the display panel is not equipped with a quarter-wave plate and linearly polarized light is emitted from the second polarizer, when a user wearing sunglasses views the images displayed on a display panel at certain viewing angles, serious color cast is caused and even the images are invisible to the user's eyes. In an embodiment of the present application, circularly polarized light which is emitted through a quarter-wave plate is captured by the human eyes, so that for a user wearing sunglasses, it is less likely to cause serious color cast or even invisibility of the images. In summary, an embodiment of the present application arranges a quarter-wave plate, which not only benefits human eye health, but also meets the viewing requirements of users in more scenarios, thereby improving the display effect of the display panel.

### Brief Description of Drawings

### Description of Drawings

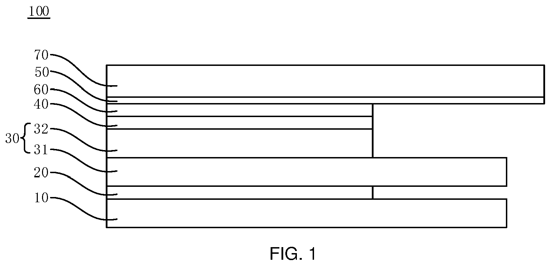

FIG. 1 is a schematic structural diagram of a display panel provided by an embodiment of the present application.

### Inventive Embodiments

### Embodiments of Invention

The technical solutions in the embodiments of the present application will be clearly and completely described below with reference to the accompanying drawings in the embodiments of the present application. Obviously, the described embodiments are merely some of the embodiments of the present application, but not all of the embodiments. Based on the embodiments in the present application, all other embodiments obtained by those skilled in the art without making creative efforts fall within the claimed scope of the present application.

Embodiments of the present application provide a display panel and an electronic device, which can improve display effect of a display panel.

Please refer to FIG. 1, which is a schematic structural diagram of a display panel provided by an embodiment of the present application. A display panel 100 is suitable for use in an electronic device. The electronic device can be any product or component with a display function. For example, the electronic device can be a television and the display panel 100 is a television screen, or the electronic device can be a mobile phone and the display panel 100 is a mobile phone screen, or the electronic device can be a smart home appliance and the display panel 100 is a display screen of the smart home appliance. Of course, the electronic device may also be a navigator, a notebook computer, etc., which is not limited in the embodiments of the present application.

The display panel 100 may comprise a backlight module 10, a first polarizer 20, a display structure layer 30, a second polarizer 40, and a quarter-wave plate 50.

The backlight module 10 is disposed on a light incident surface of the first polarizer 20. A light incident surface of the display structure layer 30 is disposed on a light emergent surface of the first polarizer 20 such that the light emitted by the backlight module 10 is converted by the first polarizer 20 into linearly polarized light which is emitted to the light incident surface of the display structure layer 30, the display structure layer 30. A light incident surface of the second polarizer 40 is disposed on a light emergent surface of the display structure layer 30 such that the light emitted from the display structure layer 30 enters the second polarizer 40 through the light incident surface of the second polarizer 40 and is converted into linearly polarized light by the second polarizer 40, which is then emitted from a light emergent surface of the second polarizer 40. A light incident surface of the quarter-wave plate 50 is disposed on the light emergent surface of the second polarizer 40 such that the quarter-wave plate 50 can receive the linearly polarized light emitted from the second polarizer 40 and emit circularly polarized light.

In the related art, the quarter-wave plate 50 is not provided on the light emergent surface of the second polarizer 40. Therefore, the light emitted by the display panel 100 for displaying images is the linearly polarized light emitted from the second polarizer 40. In a case where a user wearing sunglasses views the display panel 100 for an example: when the user adjusts the angle of viewing the second polarizer 40 to an angle at which the absorption axis of the sunglasses is parallel to the absorption axis of the second polarizer 40, the linearly polarized light emitted directly from the display panel 100 can pass through the sunglasses and then be captured by the user's eyes, that is, the images displayed on the display panel is visible to the user; when the user adjusts the angle of viewing the second polarizer 40 to an angle at which the absorption axis of the sunglasses is perpendicular to the absorption axis of the second polarizer 40, the linearly polarized light directly emitted from the display panel 100 is partially or even fully absorbed by the sunglasses, which results that the linearly polarized light directly emitted by the display panel cannot be captured by the user's eyes fully or partially, that is, the images displayed by the display panel 100 have serious color cast or are even invisible to the user. In summary, in the related art, a user when wearing sunglasses to view the display panel 100, suffers serious color cast, and even invisibility is caused at certain angles of viewing the display panel 100.

In comparison, in the embodiment of the present application, since the quarter-wave plate 50 is disposed on the light emergent surface of the second polarizer 40, the light emitted by the liquid crystal module of the display panel 100 is circularly polarized light. Therefore, when a user wearing sunglasses observes the light emergent surface of the quarter-wave plate 50 from various angles, invisibility is not caused, and the color cast at certain viewing angles is reduced or even completely displayed. On the other hand, compared with linearly polarized light, circularly polarized light is closer to natural light and is beneficial to human eye health.

Wherein, the quarter-wave plate 50 (quarter-wave plate, QWP) is also called "quarter-wave delay plate". When light having a certain wavelength is vertically enters and passes through the quarter-wave plate 50, the phase difference between the exited ordinary light and the exited extraordinary light emitted is 1/4 wavelength, and the linearly polarized light can be converted into circularly polarized light.

In some embodiments, the angle between the optical axis of the quarter-wave plate 50 and the transmission axis of the second polarizer 40 is 45°. The light incident surface of the quarter-wave plate 50 is parallel to the optical axis of the quarter-wave plate 50. Furthermore, after the linearly polarized light emitted from the second polarizer 40 is emitted to the quarter-wave plate 50, the quarter-wave plate 50 can emit circularly polarized light.

The quarter-wave plate 50 and the second polarizer plate 40 may be connected in various ways. For example, after the quarter-wave plate 50 and the second polarizer 40 are stacked, their end edges are clamped and fixed by the middle frame or the back shell of the display panel 100.

Alternatively, the quarter-wave plate 50 and the second polarizer 40 may be bonded and fixed through a first optical adhesive layer 60. For example, the light incident surface of the quarter-wave plate 50 is completely covered with optical glue and is bonded to the light emergent surface of the second polarizer 40 through the optical glue. After the optical glue dries, the first optical glue layer 60 is formed to bond and fix the quarter-wave plate 50 and the second polarizer 40.

For example, the first optical glue layer 60 may be OCA (Optically Clear Adhesive) glue. The light emergent surface of the second polarizer 40 can be bonded to the light incident surface of the quarter-wave plate 50 after the OCA glue is coated on the light incident surface of the quarter-wave plate 50, and then the OCA glue is dried through solidification by ultraviolet light to form the first optical adhesive layer 60 such that the quarter-wave plate 50 and the second polarizer 40 are bonded and fixed through the first optical adhesive layer 60.

Optionally, the light emergent surface of the second polarizer 40 can be bonded to the light incident surface of the quarter-wave plate 50 after the OCA glue is coated on the light emergent surface of the second polarizer 40, and then the OCA glue is dried through solidification by ultraviolet light to form the first optical adhesive layer 60 such that the quarter-wave plate 50 and the second polarizer 40 are bonded and fixed through the first optical adhesive layer 60. It can be understood that OCA glue not only has the advantages of reducing glare and increasing contrast and can further increase the strength of the connection between the quarter-wave plate 50 and the second polarizer 40.

In some embodiments, quarter-wave plate 50 may include a sheet-form birefringent crystal. For example, the quarter-wave plate 50 may be formed by a crystal or calcite. In actual operation, a monolithic birefringent crystal raw material is cut along the optical axis direction of the birefringent crystal to obtain a sheet-form birefringent crystal serving as the quarter-wave plate 50. At this time, the optical axis of the birefringent crystal is parallel to a light incident surface of the birefringent crystal, and the light incident surface of the birefringent crystal is disposed on the light emergent surface of the second polarizer 40.

Alternatively, the quarter-wave plate 50 can also be made of mica, cellophane, or polyvinyl alcohol, which is not limited in the embodiments of the present application.

Of course, the quarter-wave plate 50 can be formed by cutting, or the quarter-wave plate 50 can also be a diaphragm formed through an extension process.

In order to protect the quarter-wave plate 50, the display panel 100 may further comprise a transparent cover 70. The transparent cover 70 is disposed on the light emergent surface of the quarter-wave plate 50 such that the quarter-wave plate 50 is protected by the transparent cover 70. Furthermore, the transparent cover 70 may be a glass cover. It can be understood that the embodiments of the present application are not limited to this. Any transparent cover 70 that protects the light emergent surface of the quarter-wave plate 50 is all within the claimed scope of the embodiments of the present application.

In some embodiments, the light emergent surface of the quarter-wave plate 50 can be attached to the transparent cover 70. For example, the light emergent surface of the quarter-wave plate 50 is attached to the transparent cover 70 through a second optical adhesive layer such that the light emergent surface of the quarter-wave plate 50 is bonded to the glass cover. Of course, the embodiments of the present application do not limit the connection between the quarter-wave plate 50 and the transparent cover 70. For example, after the light emergent surface of the quarter-wave plate 50 is stacked on the second polarizer 40, they are clamped and fixed by the middle frame or the back shell of the display panel 100 on their end edges.

Optionally, the quarter-wave plate 50 may be formed on the transparent cover 70 through a coating process. That is, the quarter-wave plate raw material in a fluid state is coated on the transparent cover 70. When the quarter-wave plate raw material coated on the transparent cover 70 dries, the quarter-wave plate 50 is formed.

In actual use, the distance between the light incident surface and the light emergent surface of the quarter-wave plate 50 is between 5 µm and 40 µm, that is, the thickness of the quarter-wave plate 50 is between 5 µm and 40 µm. Furthermore, on the premise that the quarter-wave plate 50 can convert the linearly polarized light of the second polarizer 40 into circularly polarized light, the quarter-wave plate 50 is made thinner, so that the display panel 100 can be made thin and light. change. On the premise that the quarter-wave plate 50 is capable of converting the linearly polarized light of the second polarizer 40 into circularly polarized light, the quarter-wave plate 50 is made thinner such that the display panel 100 can be made thinner and lighter.

In some embodiments, the display panel 100 may be an LCD (Liquid Crystal Display).

For example, the display structure layer 30 may comprise a TFT (Thin Film Transistor) substrate 31 and a color filter 32 (Color filter). A light incident surface of the TFT substrate 31 is disposed on the light emergent surface of the first polarizer 20. A light incident surface of the color filter 32 is disposed on a light emergent surface of the TFT substrate 31, and a light emergent surface of the color filter 32 is disposed on the light incident surface of the second polarizer 40.

Wherein, the TFT substrate 31 is encapsulated with a liquid crystal material in the middle. A control circuit of the display panel 100 provides a voltage to the TFT substrate 31 to change the arrangement direction of the liquid crystal molecules of the liquid crystal material. The light emitted by the backlight module 10 passes through the first polarizer 20 and then enters the TFT substrate 31 such that display images are formed through the cooperation of the backlight module 10, the TFT substrate 31, and the color filter 32. The formed display images are emitted in the form of light and then captured by the human eyes, so that the user can observe the images displayed by the display structure layer 30.

In the above embodiments, each embodiment is described with its own emphasis. For parts that are not described in detail in a certain embodiment, please refer to the relevant descriptions of other embodiments.

The display panel and electronic device provided in the embodiments of the present application have been introduced in detail above. Specific examples are used in this article to illustrate the principles and implementation of the present application. The description of the above embodiments is only used to help understand the methods and the core idea of the present application. At the same time, for those skilled in the art, there are changes in the specific implementation and application scope based on the ideas of the present application. In summary, the content of this description should not be understood as a limitation to this application.

## Claims

1. A display panel comprising:
a first polarizer;
a display structure layer, a light incident surface of the display structure layer be disposed
on a light emergent surface of the first polarizer;
a second polarizer, a light incident surface of the second polarizer being disposed on a
light emergent surface of the display structure layer; and
a quarter-wave plate, a light incident surface of the quarter-wave plate being disposed on
a light emergent surface of the second polarizer, and the quarter-wave plate receiving linearly polarized light, which is emitted by the second polarizer, and emitting circularly polarized light.

2. The display panel according to Claim 1, wherein an angle between an optical
axis of the quarter-wave plate and a transmission axis of the second polarizer is 45°.

3. The display panel according to Claim 2, wherein the light incident surface of
the quarter-wave plate is parallel to the optical axis of the quarter-wave plate.

4. The display panel according to Claim 3, wherein the quarter-wave plate is
made of mica, cellophane, or polyvinyl alcohol.

5. The display panel according to Claim 3, wherein the quarter-wave plate is a
diaphragm formed through an extension process.

6. The display panel according to Claim 1, **characterized by**, the display panel
further comprising a transparent cover, and the transparent cover is bonded to a light emergent surface of the quarter-wave plate.

7. The display panel according to Claim 6, wherein the quarter-wave plate is
formed on the transparent cover through a coating process.

8. The display panel according to Claim 6, wherein the display panel further
comprises a second optical adhesive layer, and the light emergent surface of the quarter-wave plate is bonded to the transparent cover through the second optical adhesive layer.

9. The display panel according to Claim 6, **characterized by**, the quarter-wave
plate and the second polarizer being bonded and fixed through a first optical adhesive layer.

10. The display panel according to Claim 9, wherein the first optical adhesive
layer completely covers the light incident surface of the quarter-wave plate.

11. The display panel according to Claim 9, wherein the distance between the
light incident surface and the light emergent surface of the quarter-wave plate is between 5 µm and 40 µm.

12. The display panel according to Claim 1, wherein display panel is an LCD
liquid crystal display.

13. The display panel according to Claim 12, wherein the display structure layer
comprises:
a TFT substrate, a light incident surface of the TFT substrate being disposed on the light
emergent surface of the first polarizer; and
a color filter, a light incident surface of the color filter being disposed on a light emergent
surface of the TFT substrate, and a light emergent surface of the color filter being disposed on the light incident surface of the second polarizer.

14. The display panel according to Claim 1, wherein the display panel further
comprises a backlight module, and the backlight module is disposed on a light incident surface of the first polarizer.

15. The display panel according to Claim 1, wherein an end edge of the quarter-
wave plate and an end edge of the second polarizer are clamped and fixed by a middle frame or a back shell of the display panel.

16. A display panel comprising:
a backlight module;
a first polarizer, a light incident surface of the first polarizer being disposed one side of
the backlight module;
a TFT substrate, a light incident surface of the TFT substrate being disposed on a light
emergent surface of the first polarizer;
a color filter, a light incident surface of the color filter being disposed on a light emergent
surface of the TFT substrate;
a second polarizer, a light incident surface of the second polarizer being disposed on a
light emergent surface of the color filter; and
a quarter-wave plate, a light incident surface of the quarter-wave plate being disposed on
a light emergent surface of the second polarizer, and the quarter-wave plate receiving linearly polarized light, which is emitted by the second polarizer, and emitting circularly polarized light.

17. The display panel according to Claim 16, wherein an angle between an
optical axis of the quarter-wave plate and a transmission axis of the second polarizer is 45°, and the light incident surface of the quarter-wave plate is parallel to the optical axis of the quarter-wave plate.

18. The display panel according to Claim 16, wherein the quarter-wave plate and
the second polarizer are bonded and fixed through a first optical adhesive layer.

19. The display panel according to Claim 16, wherein the display panel further
comprises a transparent cover, and the transparent cover is bonded to a light emergent surface of the quarter-wave plate.

20. An electronic device, wherein, comprising a display panel as claimed in one
of Claims 1-19.
